Europäisches Patentamt

European Patent Office

Office européen des brevets

(19)

(11) Veröffentlichungsnummer : **0 171 617**
**B1**

(12) **EUROPÄISCHE PATENTSCHRIFT**

(45) Veröffentlichungstag der Patentschrift :
28.09.88

(51) Int. Cl.⁴ : **H 02 P   7/628**, H 02 P   7/62

(21) Anmeldenummer : 85108740.3

(22) Anmeldetag : 12.07.85

(54) Verfahren und Vorrichtung zum Betrieb eines Zwischenkreisumrichters mit Stromanstiegsbegrenzung.

(30) Priorität : 27.07.84 DE 3427841

(43) Veröffentlichungstag der Anmeldung :
19.02.86 Patentblatt 86/08

(45) Bekanntmachung des Hinweises auf die Patenterteilung : 28.09.88 Patentblatt 88/39

(84) Benannte Vertragsstaaten :
AT DE FR GB IT SE

(56) Entgegenhaltungen :
EP-A- 0 084 367
DE-A- 3 015 144
DE-B- 2 144 422
US-A- 3 824 437
IEEE TRANSACTIONS ON INDUSTRY APPLICATION,
Band IA-16, Nr. 2, März/April 1980, Seiten 193-202,
IEEE, New York, US; L.H. WALKER et al.: "A highperformance controlled-current inverter drive"

(73) Patentinhaber : Siemens Aktiengesellschaft Berlin
und München
Wittelsbacherplatz 2
D-8000 München 2 (DE)

(72) Erfinder : Blaschke, Felix, Dr.
Steinforststrasse 19
D-8520 Erlangen (DE)

**Beschreibung**

Die Erfindung geht aus von einem Verfahren zum Betrieb eines Zwischenkreis-Umrichters mit eingeprägtem Zwischenkreisstrom, für den ein gleitender Sollwert vorgegeben wird. Unter einem « gleitendem Sollwert » wird ein Sollwert verstanden, der nur mit endlicher Anstiegsgeschwindigkeit veränderlich ist. Wird also insbesondere für den Zwischenkreis-Gleichstrom oder die Amplitude des Ausgangswechselstroms eines Zwischenkreisumrichters eine Führungsgröße vorgegeben, die sprunghaft verändert wird, so wird aus dieser sprunghaften Führungsgröße z. B. in einem Hochlaufgeber ein Sollwert für diesen Strom erzeugt, der nur kontinuierlich, d. h. mit endlicher, durch die Hochlaufgeschwindigkeit des Hochlaufgebers vorgegebener Anstiegsgeschwindigkeit auf den neuen, um den Führungsgrößensprung veränderten Wert hochläuft.

Ein derartiger Zwischenkreisumrichter mit gleitender Sollwertvorgabe ist in der DE-B-21 44 422 beschrieben und besteht aus einem von einer Führungsgröße beaufschlagten Verstärkungsglied mit nachgeschaltetem Integrator, wobei das Integrator-Ausgangssignal mit einem konstant eingestellten Verstärkungsfaktor dem Verstärkungsglied zur Bestimmung des Verstärkungsfaktors aufgeschaltet ist. Das Integrator-Ausgangssignal stellt dann den gleitenden Sollwert, das Integrator-Eingangssignal dagegen die Anstiegsgeschwindigkeit des Sollwerts dar.

In dieser Patentschrift steuert jeweils ein derartiger Sollwert die beiden orthogonalen Komponenten des Ständerstromvektors einer Drehfeldmaschine, wobei ein nachgeordneter Vektoranalysator den Betrag des durch die Sollwerte vorgegebenen Sollstromvektors sowie die Richtung dieses Vektors bestimmt. Der Betrag ist einem Stromregler zur Regelung des Zwischenkreisstromes zugeführt, der den eingangsseitigen Gleichrichter des Zwischenkreisumrichters steuert, während mit der Richtung über einen Phasenregelkreis die Richtung (d. h. Frequenz und Phase) des Ständerstromvektors in einem entsprechenden, auf den maschinenseitigen Wechselrichter arbeitenden Phasenregelkreises gesteuert wird. Der Vektoranalysator ist dabei ein Spezialfall eines kartesisch/polararbeitenden Komponentenwandlers, der aus den kartesischen Komponenten eines Vektors deren Betrag und deren Richtung ermittelt. Allgemein geben Vektoranalysatoren die Richtung in Form der kartesischen Komponenten des entsprechenden Einheitsvektors wieder, während « k/P-Wandler » die Richtung durch ein einziges Winkelsignal angeben.

Dabei ist vorgesehen, die Führungsgrößen für die beiden Stromkomponenten entsprechend Sollwerten für den feldparallelen und den feldsenkrechten Anteil des Ständerstromes vorzugeben, wodurch Drehmoment und Fluß unabhängig von- einander gesteuert oder geregelt werden können.

Nun darf aber bei einem Umrichter mit Gleichstromzwischenkreis der Zwischenkreisstrom i von einem Kommutierungszeitpunkt (T) bis zum nächsten Kommutierungszeitpunkt $(T + \Delta T)$ nur um einen bestimmten Faktor C erhöht werden, wenn eine sichere Kommutierung gewährleistet sein soll, d. h. zwischen den Strömen i (T) und $i(T + \Delta T)$ zu den beiden Kommutierungszeitpunkten muß $i(T + \Delta T) \leqslant i(T) + C \cdot i(T)$ erfüllt sein, d. h. für die Anstiegsgeschwindigkeit des Stromes soll gelten :

$$di(T)/dt = [i(T + \Delta T) - i(T)]/\Delta T \leqslant C \cdot [i(T)/\Delta T]$$

Demnach muß die Stromanstiegsgeschwindigkeit einerseits mit Rücksicht auf den kleinsten auftretenden Strom i, andererseits mit Rücksicht auf die größte auftretende Dauer $\Delta T$ (d. h. die niedrigste Frequenz) begrenzbar sein. Dies führt dazu, daß bei einer Regelung oder Steuerung des Zwischenkreisstromes die Anstiegsgeschwindigkeit des Zwischenkreisstromes auf einen Maximalwert begrenzt werden muß.

Der Umrichter kann also nicht schlagartig auf eine höhere Leistung hochgefahren werden. Dies führt dazu, daß in Betriebszuständen, bei denen sowohl höhere Frequenzen wie höhere Ströme vorliegen, die an sich maximal zulässige Stromanstiegsgeschwindigkeit durch die Stromanstiegsbegrenzung ausgeschlossen wird, so daß z. B. in der erwähnten Patentschrift gewisse Lastsprünge an der Drehfeldmaschine nicht schnell genug durch Verstellen der Stromsollwerte ausgeregelt werden können.

Bei der eingangs beschriebenen feldorientierten Regelung der Drehfeldmaschine erscheint es zunächst ausreichend, mittels eines Vektoranalysators oder k/p-Wandlers lediglich den Betrag desjenigen Vektors zu ermitteln, dessen kartesische Komponenten durch die beiden Führungsgrößen gegeben sind, und die Anstiegsgeschwindigkeit dieses Führungsvektor-Betrages zu begrenzen. Da aber der Vektorbetrag von beiden orthogonalen Komponenten abhängt, würde eine derartige, auf die Betragsregelung wirkende Anstiegsbegrenzung dazu führen, daß z. B. bei einem Sprung in der Führungsgröße für die feldsenkrechte Ständerstromkomponente (Wirkstrom) auch die feldparallele Komponente (Magnetisierungsstrom) solange geändert würde, bis der hochlaufende Sollwert den neuen angestrebten Betriebszustand erreicht hat. Dadurch würde die gewünschte entkoppelte Beeinflussung von Wirkstrom und Blindstrom aufgehoben.

Deshalb ist die bekannte Vorrichtung nach der Patentschrift so ausgebildet, daß sich im Regelkreis für den Betrag keine Hochlaufglieder zum Zwecke der Stromanstiegsbegrenzung befinden. Vielmehr wird die Stromanstiegsbegrenzung bereits bei der Bildung der gleitenden Sollwerte für die beiden Stromkomponenten vorgenommen und als Sollwert für die Regelung des Zwischenkreisstromes dient der Betrag des durch die gleitenden Sollwerte vorgegebenen Sollstromvektors.

Der Ausgangsstrom des Umrichters wird nun derart auf diesen Sollstromvektor geregelt, daß einerseits ein Betragsregler den Betrag des Zwischenkreisstromes bzw. die Amplitude des Ausgangsstromes auf den Betrag des Sollstromvektors regelt und dem Ausgangssignal dieses Betragsreglers eine der Anstiegsgeschwindigkeit des Betragssollwertes entsprechende Größe als Vorsteuerspannung aufgeschaltet wird. Die Zwischenkreisdrossel des Umrichters entspricht nämlich regelungstechnisch einem Integrierglied mit der treibenden Spannung als Eingangsgröße und dem Strom als Ausgangsgröße, d. h. die zeitliche Ableitung des Zwischenkreisstromes ist der treibenden Spannung an der Zwischenkreisdrossel proportional und die Aufschaltung dieser Vorsteuergröße erzwingt, daß jeweils sofort ein dem jeweiligen Zwischenkreisstrom-Sollwert entsprechender Gleichstrom aufgebaut und stationär durch die Wirkung des Stromreglers aufrecht erhalten wird.

Ferner ist vorgesehen, dem Ausgang des Betragsreglers eine weitere Vorsteuergröße aufzuschalten, die der am wechselrichterseitigen Anschluß der Zwischenkreisdrossel auftretenden Spannung proportional ist und dadurch die am gleichrichterseitigen Anschluß der Drossel auftretende Spannung der Wechselrichter-Eingangsspannung nachführt. Dies entspricht einer Entkopplung des der Zwischenkreisdrossel nachgeschalteten Stromkreisteils, so daß die Drossel den Charakter eines rückwirkungsfrei arbeitenden Integrators enthält. Der Drosselstrom kann dann rückwirkungsfrei ausschließlich durch das Ausgangssignal des Strombetragsreglers eingeprägt werden. Allerdings wird diese zweite Vorsteuergröße nicht als Meßwert an der Drossel abgegriffen, sondern aus geeigneten Steuergrößen errechnet, um anstelle oberwellenhaltiger Istwerte praktisch oberwellenfreie Ersatz-Istwerte verwenden zu können. Der Zwischenkreisstrom-Regelkreis wirkt daher nahezu verzögerungsfrei auf die Amplitude des Ausgangsstroms, während Phase und Frequenz des Ausgangsstroms dadurch vorgegeben werden, daß die Richtung des Ständerstromvektors durch einen auf die Wechselrichterfrequenz arbeitenden Richtungsregler der Richtung des Sollstromvektors nachgeführt wird.

Die bekannte Anordnung erreicht damit, daß einerseits die Anstiegsgeschwindigkeit des Zwischenkreisstroms durch Vorgabe der gleitenden Sollwerte begrenzt ist, andererseits diese Anstiegsgeschwindigkeitsbegrenzung die entkoppelte Vorgabe von Wirkstrom und Magnetisierungsstrom nicht stört.

Das der Erfindung zugrunde liegende Problem ist, eine möglichst rasche Amplitudenänderung des Ständerstromvektors unter Einhaltung der Kommutierungsfähigkeit zu erreichen, und wird durch die bekannte Einrichtung nicht gelöst. Diese Aufgabe wird vielmehr dadurch gelöst, daß die Anstiegsgeschwindigkeit des Sollwerts nicht mehr auf einen konstanten Maximalwert begrenzt wird, sondern mit steigender Umrichterfrequenz erhöht wird. Soweit hierfür elektrische Betriebsgrößen benötigt werden, wird insbesondere ein für den momentanen Betriebszustand jeweils zulässiger Maximalwert der Stromanstiegsgeschwindigkeit jeweils aus den in der Stromrichtersteuerung selbst gebildeten Führungsgrößen und Sollwerten dieser elektrischen Betriebsgrößen ermittelt und als Anstiegsgeschwindigkeit des Stromsollwerts vorgegeben.

Als Maximalwert kann insbesondere das Produkt aus der Umrichterfrequenz und dem Zwischenkreisstrom bzw. der Ausgangsstromamplitude des Wechselrichters vorgegeben werden, um dadurch sicherzustellen, daß die eingangs genannte Ungleichung stets erfüllt ist.

Dieses Produkt kann ferner als Sollwert einer Anstiegsgeschwindigkeitsregelung verwendet werden, die immer dann eingreift, wenn sich der Istwert i des Stromes mit einer Geschwindigkeit ändern würde, die über dem vorgegebenen Sollwert der Stromanstiegsgeschwindigkeit liegt. Die Regelung greift dann in die Bildung des gleitenden Sollwertes derart ein, daß die Anstiegsgeschwindigkeit di/dt dem Sollwert der Anstiegsgeschwindigkeit gleich wird. Bei sprungartigen Führungsgrößen-Änderungen wird also die Anstiegsgeschwindigkeit des Sollwertes durch eine Regelung betriebsabhängig so bestimmt, daß die Anstiegsgeschwindigkeit des Stromistwertes praktisch immer auf den Sollwert der Anstiegsgeschwindigkeit (insbesondere also immer auf den betriebsabhängig vorgegebenen Maximalwert) eingeregelt ist.

Diese Maßnahme ist bei einem Stromzwischenkreis deshalb von Bedeutung, weil die Zwischenkreisdrossel an sich bei gesteuertem Umrichterbetrieb bewirkt, daß der Iststrom i einem Sollwert i*, für dessen Anstiegsgeschwindigkeit (di*/dt) ein Sollwert (di**/dt) vorgegeben ist, nur verzögert zu folgen vermag. Ohne besondere Maßnahmen kann selbst eine unterlagerte Regelung diese Verzögerung im allgemeinen nicht schnell genug ausregeln und nicht sicherstellen, daß di/dt = (di*/dt)* gilt. Dies wird aber erreicht durch die erfindungsgemäße Anstiegsgeschwindigkeitsregelung, von der die Anstiegsgeschwindigkeit di*/dt des Sollwertes i* betriebsabhängig vorgegeben wird.

Da diese Regelung aber nur in die Gleitgeschwindigkeit des Sollwertes bei schnellen Stromänderungen eingreift und daher bei einer langsamen Änderung der Führungsgröße die übliche Stromregelung nicht beeinflußt, handelt es sich hier um eine Regelung des Grenzwertes der Stromanstiegsgeschwindigkeit (« Stromanstiegsbegrenzungsregelung »), die bewirkt, daß der Umrichter bei einer sprungartigen Änderung der Führungsgrößen stets mit der maximal zulässigen Geschwindigkeit die zu den neuen Führungsgrößen gehörende Amplitude des Zwischenkreisstromes bzw. des Ausgangsstromes einstellt.

Benutzt man allgemein bei einer Regelung der Stromanstiegsgeschwindigkeit den tatsächlichen Strom als Istwert, so kann der Oberwellengehalt des Zwischenkreisstromes bzw. der Ausgangsstromamplitude zu Störungen führen. Um daher die Anstiegsgeschwindigkeit des Zwischenkreisstroms möglichst rasch und zuverlässig auf einen vorgegebenen Wert, insbesondere den als Produkt von Frequenz und Strom gebildeten zulässigen Maximalwert, einzuregeln, ist als andere oder zusätzliche erfindungsgemäße Maßnahme vorgesehen, den Istwert dieser Stromanstiegsbegrenzungsregelung aus den Stromsollwerten selbst abzuleiten, wobei gleichzeitig durch eine Vorsteuerung des Zwischenkreisstroms sichergestellt wird, daß der Zwischenkreisstrom-Istwert dem Zwischenkreisstrom-Sollwert möglichst verzögerungsfrei folgt. Für diese Begrenzungsregelung wird also ein Stromanstiegsgeschwindigkeits-Sollwert gebildet und mit der Anstiegsgeschwindigkeit des Stromsollwerts verglichen. Das Ausgangssignal dieser Regelung stellt die Anstiegsgeschwindigkeit des Sollwerts selbst dar, so daß dem Umrichter als Sollwert für den Zwischenkreisstrom das Integral dieser Sollwertanstiegsgeschwindigkeit vorgegeben werden kann.

Die Vorgabe des Produkts aus Umrichterfrequenz und Strom als Maximalwert für die Stromanstiegsgeschwindigkeit und die Regelung der Stromanstiegsgeschwindigkeit auf einen maximal zulässigen Sollwert können miteinander und mit den in der deutschen Patentschrift 21 44 422 beschriebenen Maßnahmen zur Steuerung eines Umrichters verbunden werden. Die dadurch vorteilhaft entstehenden Weiterbildungen der Erfindung sowie eine entsprechende Vorrichtung sind in den abhängigen Ansprüchen gekennzeichnet.

Anhand von zwei Ausführungsbeispielen und vier Figuren ist die Erfindung näher erläutert.

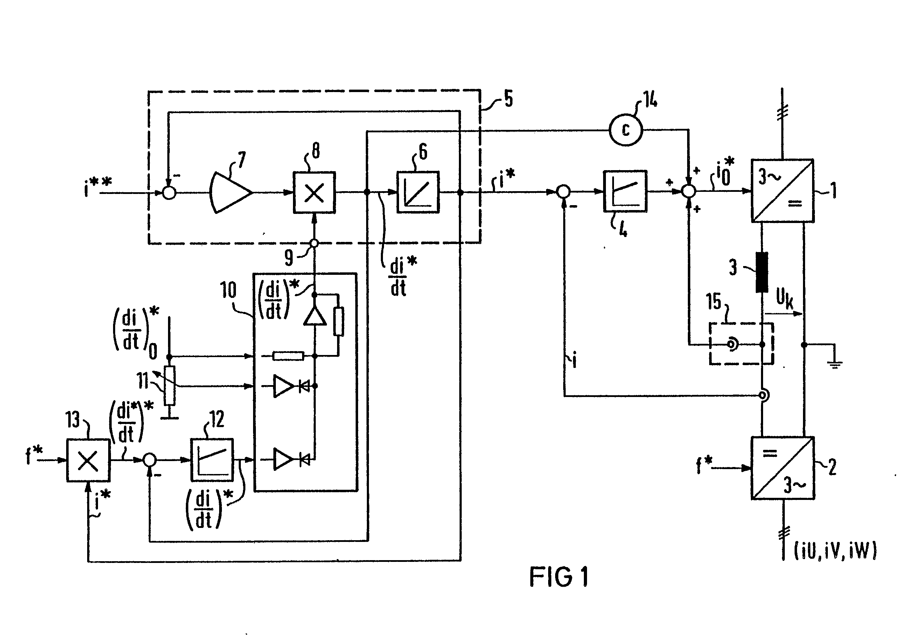

In Figur 1 ist mit 1 ein steuerbarer Gleichrichter und mit 2 ein Wechselrichter bezeichnet, deren Gleichspannungsanschlüsse über die Zwischenkreisdrossel 3 miteinander verbunden sind. Dabei ist zunächst der Fall angenommen, daß der aus 1, 2, 3 bestehende Umrichter bezüglich Frequenz und Amplitude vollkommen unabhängig voneinander gesteuert werden darf, so daß die Umrichterfrequenz von einer Frequenzsteuergröße f* für den Wechselrichter 2 vorgegeben wird, während der Zwischenkreisstrom (bzw. die Amplitude des Ausgangsstromes) von einer auf den Gleichrichter 1 wirkenden, von einem Stromregler 4 gebildeten Stromsteuergröße gesteuert wird. Der Istwert des Stromreglers 4, der am Zwischenkreisstrom oder über einen Gleichrichter an den Zu- oder Ableitungen des Umrichters abgegriffen werden kann, ist mit i bezeichnet, während für den entsprechenden Sollwert das Symbol i* gewählt ist.

Im stationären Zustand soll der Stromsollwert i* gleich einer Führungsgröße i** sein, jedoch sorgt ein Hochlaufgeber 5 bei einem Sprung von i** dafür, daß der Stromsollwert i* nur gleitend, d. h. mit einer vorgegebenen Anstiegsgeschwindigkeit (di*/dt)*, in den neuen Wert von i** übergeht, wobei durch die Soll-Anstiegsgeschwindigkeit (di*/dt)* auch die Anstiegsgeschwindigkeit (di/dt) gegeben ist. Falls der Stromregler 4 verzerrungsfrei auf den Zwischenkreisstrom wirkt, ist die Anstiegsgeschwindigkeit (di*/dt) des Sollwerts i* auch gleich der Anstiegsgeschwindigkeit (di/dt) des Zwischenkreisstroms selbst, wobei die Forderung nach der Kommutierfähigkeit des Umrichters eine Beschränkung von (di/dt) nötig macht.

Der Hochlaufgeber 5 enthält an seinem Ausgang für i* einen Integrator 6, dessen Eingangssignal somit die Sollwertanstiegsgeschwindigkeit di*/dt darstellt. Die Differenz zwischen dem gleitend vorzugebenden Sollwert i* und der Führungsgröße i** ist einem Verstärker 7 aufgeschaltet, der eine sehr hohe Verstärkung aufweist und somit bereits bei sehr niedrigen Werten von i**-i* in den Anschlag geht. Sein Ausgangssignal nimmt also praktisch keinen Wert zwischen 0 und + 1 an und wird in einem Multiplizierer 8 mit dem Wert (di/dt)* für die Anstiegsgeschwindigkeit des Zwischenkreisstroms i multipliziert. Das Ausgangssignal dieses Multiplizierers 8 ist somit die Anstiegsgeschwindigkeit di*/dt des Stromsollwerts und wird gemäß der Erfindung an der Klemme 9 betriebsabhängig vorgegeben.

Für diese betriebsabhängige Vorgabe von (di/dt)* ist eine in Fig. 1 als Diodenschaltung angedeutete Minimumschaltung 10 vorgesehen, die der Klemme 9 nur dann die an einem entsprechenden Eingang anstehende Größe (di/dt)* aufschaltet, wenn diese Größe kleiner ist als eine an einem Potentiometer 11 eingestellte Grenze (di/dt)$_0$*.

Dieser Wert (di/dt$_0$*) ist so eingestellt, daß er bei Betrieb mit der höchsten Umrichterfrequenz und dem höchsten Umrichterausgangsstrom noch die Kommutierungsfähigkeit des Umrichters sicherstellt.

In Betriebszuständen, bei denen der momentane Zwischenkreisstrom i bzw. die Umrichterausgangsfrequenz f nicht den Maximalwert annehmen, auf den die Konstante (di/dt)$_0$* abgestimmt ist, liefert ein Anstiegsgeschwindigkeitsbegrenzungsregler 12 den Wert (di/dt)*, der über den Multiplizierer 8 als Integrationszeitkonstante dem Integrator 6 aufgeschaltet ist und somit zum Sollwert i* = ∫(di*/dt).dt führt, solange Ungleichheit zwischen i* und i** besteht.

Der Regler 12 erhält seinen Sollwert proportional zum Produkt aus Frequenz und Stromamplitude, wobei vorteilhaft als Frequenz der entsprechende Frequenzsollwert f* und als Stromamplitude der Sollwert i* selbst verwendet ist.

Dieser Sollwert C. f*. i* wird als betriebsabhängig maximal zulässiger Sollwert (di*/dt)* von einem Multiplizierer 13 geliefert und bestimmt somit den Sollwert für die Anstiegsgeschwindigkeit di*/dt des Stromsollwerts i*, der seinerseits die Anstiegsgeschwindigkeit des Zwischenkreisstroms i selbst bestimmt. Daß dieser maximale Sollwert (di*/dt)* tatsächlich die Anstiegsgeschwindigkeit di*/dt des Sollwerts i* angibt, wird dadurch erreicht, daß dem Regler 12 als Ersatz-Istwert für die tatsächliche Stromanstiegsgeschwindigkeit di/dt das Eingangssignal des Integrators 6 aufgeschaltet ist.

Eine besondere Ausführung der Stromregelung stellt nun sicher, daß der auf den Maximalwert (di*/dt)* beschränkte Anstieg des Sollwerts i* auch zu einer entsprechenden Beschränkung der Anstiegsgeschwindigkeit des Strom-Istwertes i führt. Wie bereits im Zusammenhang mit der DE-PS 2 144 422 erläutert wurde, geschieht dies dadurch, daß dem Ausgangssignal des Stromreglers 4 zwei Spannungen aufgeschaltet werden, die sich jeweils als Störspannung für den Gleichrichter 1 bemerkbar machen : nämlich die Spannung Uk, die am wechselrichterseitigen Anschluß der zwischen Kreisdrossel 3 durch die Wirkung des Wechselrichters und der Gegenspannung der nachgeordneten Last bestimmt ist, sowie die den Zwischenkreisstrom durch die Spule zwischen Kreisdrossel 3 treibende Spannung.

Diese Spannungen führen an sich dazu, daß der Zwischenkreisstrom-Istwert i dem entsprechenden Sollwert i* nur mit einer Verzögerung zu folgen vermag. Die Aufschaltung der entsprechenden Vorsteuersignale kompensiert jedoch diese Verzögerung. Anstelle des den Zwischenkreisstrom treibenden Spannungsabfalls an der Drossel 3 wird vorteilhaft die dazu proportionale zeitliche Ableitung des Sollwerts i* als Vorsteuersignal verwendet. Dieses Vorsteuersignal wird direkt am Eingang des Integrators 6 über ein Proportionalglied 14 abgegriffen. Ebenfalls ist es nach der DE-PS 21 44 422 möglich, anstelle der Spannungs-Erfassungsschaltung 15 für die wechselrichterseitige Anschlußspannung Uk der Drossel 3 eine Rechenschaltung zu verwenden, die aus anderen, z. B. bei der Bildung der Werte f* und i** anfallenden Steuergrößen die Spannung $U_k$ berechnet.

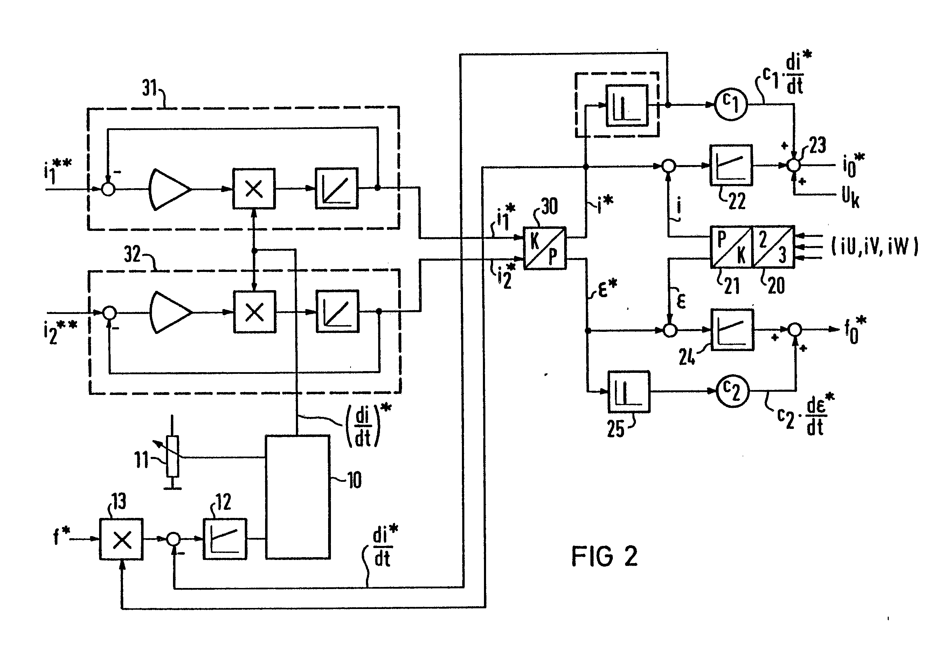

Beim Ausführungsbeispiel nach Fig. 2 wird der Meßwert i des zu begrenzenden Zwischenkreisstromes nicht am Zwischenkreis selbst abgegriffen, sondern an den Ausgängen U, V und W des Wechselrichters 2, wobei die entsprechenden Phasenströme iU, iV, iW mittels eines 2/3-Wandlers 20 in die beiden kartesischen Komponenten eines entsprechenden Stromvektors umgerechnet werden, aus dem dann ein polar/kartesisch-arbeitender Wandler 21 die Amplitude (Betrag i des Stromvektors) und die Phase (Richtung ε des Stromvektors) ermittelt. Der zu den Meßwerten iU, iV, iW gehörende Strom-Istvektor wird nun durch eine Regelung auf einen Strom-Sollvektor eingeregelt, der durch einen Soll-Betrag i* und eine Soll-Richtung ε* bestimmt ist.

Damit auch diese Stromregelung verzögerungsfrei arbeitet, ist hier vorgesehen, das den Gleichrichter 1 steuernde Signal $i_0$* aus dem Ausgangssignal eines Betragreglers 22 zu bilden. Entsprechend Fig. 1 sind einerseits die Größe $C_1 \cdot (di*/dt)$, die z. B. aus dem Sollwert i* durch Differenzieren oder ohne Verwendung eines Differenzierers auf die in der DE-PS 21 44 422 angegebenen Weise aus anderen bei der Sollwertbildung anfallenden Größen berechnet werden kann, andererseits auch das entsprechende Vorsteuersignal Uk dem Betragsregler-Ausgangssignal an der Additionsstelle 23 aufgeschaltet.

Für die auf den Wechselrichter 2 arbeitende Steuergröße $f_0$*, die die Frequenz des Wechselrichters festlegt und den Strom-Istvektor in seiner Richtung (Phase) dem Strom-Sollvektor nachführt, ist ein Richtungsregler 24 vorgesehen, dessen Ausgangssignal die entsprechende, durch Ableitung des Winkels ε* gebildete Vorsteuergröße $c2 \cdot dε*/dt$ aufgeschaltet ist. Wird der Richtungswinkel ε* nicht direkt, sondern als Winkelfunktionspaar cos ε*, sin ε* vorgegeben, wie dies in der DE-PS 21 44 422 vorgesehen ist, so kann dieses zweite Vorsteuersignal ebenfalls ohne Verwendung eines Differenzierers 25 gebildet werden.

Die Regler 22 und 24 erhalten somit als Istwert einen durch Betrag i und Phase ε gegebenen Vektor und als Sollwert einen durch den Betrag i* und die Phase ε* gegebenen Soll-Vektor, deren Vektordifferenz ausgeregelt wird. Die Aufschaltung der Vorsteuergrößen di*/dt und d ε*/dt bedeutet hierbei, daß der aus der Regelabweichung gebildete Vektor praktisch mit der Ableitung des Soll-Stromvektors vorgesteuert wird. Ob diese vorgesteuerte Ausregelung der Vektordifferenz in polaren Koordinaten entsprechend der Figur 2 vorgenommen wird, oder dadurch, daß jeweils die orthogonalen (d. h. kartesischen) Komponenten der Vektoren ausgeregelt werden, ist hierbei unwesentlich.

Wesentlicher ist vielmehr, daß der Strom-Sollvektor durch zwei gleitende Sollwerte i1* und i2* vorgegeben wird, wobei i1* den Sollwert für die eine Komponente (im Falle einer feldorientiert betriebenen Drehfeldmaschine die als « Magnetisierungsstrom » bezeichnete feldparallele Komponente) und i2* den Sollwert für die andere orthogonale Komponente (den feldsenkrechten « Wirkstrom ») darstellt, wobei dann ggf. ein k/p-Wandler 30 aus diesen orthogonalen Komponenten Betrag i* und Phase ε* des entsprechenden Soll-Vektors bildet.

Für jeden dieser Sollwerte i1* und i2* ist eine entsprechende Führungsgröße i1** und i2** vorgegeben, die durch entsprechende Hochlaufgeber 31 und 32 in die gleitenden Sollwerte i1* und i2* umgewandelt werden. Jeder dieser Hochlaufgeber ist wie der Hochlaufgeber 5 der Fig. 1 aufgebaut, jedoch ist beiden Hochlaufgebern die Hochlaufgeschwindigkeit (di*/dt) gemeinsam vorgegeben. Zur Vorgabe der Hochlaufgeschwindigkeit dient dabei wieder die Minimumschaltung 10, der einerseits ein Potentiometer 11 zur Vorgabe von $(di/dt)_0$* sowie der Anstiegsgeschwindigkeit-Begrenzungsregler 12 vorgeschaltet ist. Der Sollwert (di*/dt) für die Anstiegsgeschwindigkeit des Sollwertes i* ist mittels des Multiplizierers 13 aus der Umrichter-Ausgangsfrequenz f* oder einer entsprechenden Führungsgröße sowie dem Betragssollwert i* selbst gebildet. Als Istwert für den Anstiegsgeschwindigkeitsbegrenzungsregler 12 ist (wie auch in Fig. 1) vorteilhaft das Differential di*/dt des Betragssollwertes verwendet, das in diesem Fall am Ausgang der Differenzierstufe abgegriffen ist.

Mittels der Erfindung ist es somit möglich, jeweils mit der entsprechend dem jeweiligen Betriebszustand maximal zulässigen Geschwindigkeit den Ausgangsstrom des Umrichters unter Einhaltung der Kommutierungsfähigkeit zu verstellen.

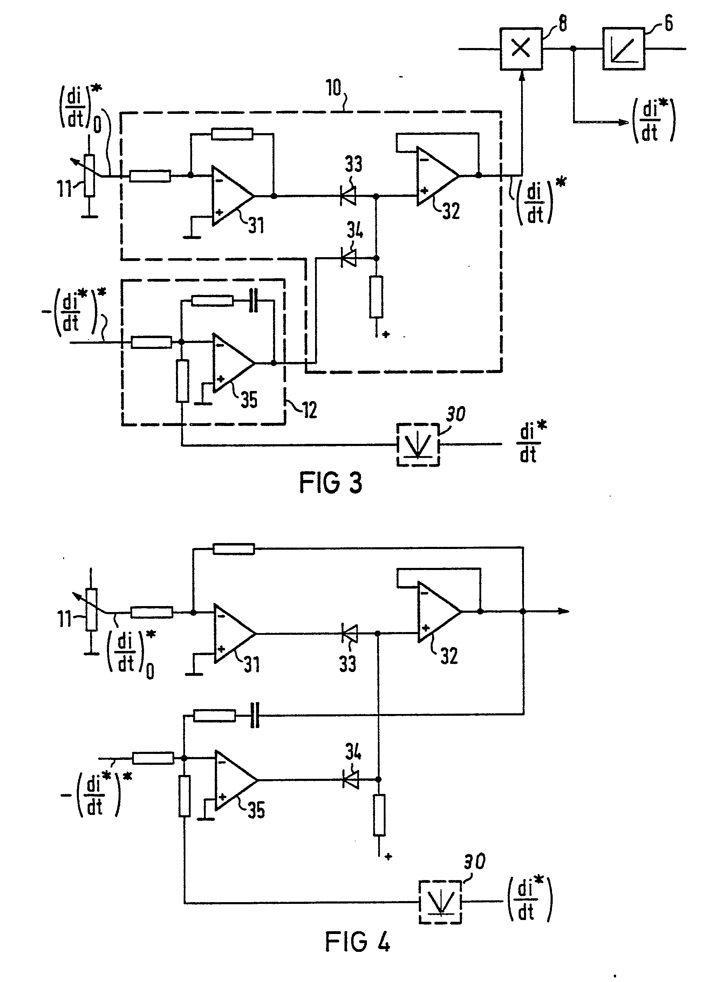

Liegt bei einer annähernd konstanten Führungsgröße i** ein annähernd konstanter Stromistwert i vor, so liegt auch der Verstärker 7 des Hochlaufgebers nicht am Anschlag, während der Begrenzungsregler 12 den Sollwert-Stromanstieg di*/dt = 0 auf den Sollwert (di*/dt)* auszuregeln sucht und daher selbst am positiven.Anschlag liegt und sich somit infolge der Auswahlschaltung 10 selbst außer Eingriff hält. Die Zeitkonstante des Integrators 6 ist in diesem Fall durch den am Potentiometer 11 eingestellten Wert gegeben. Bei einer Stromabnahme (di*/dt < 0) bleibt dieser Zustand auch dann erhalten, wenn |(di*/dt)*| ≤ |(di*/dt)| wird. Es kommt also nur bei einem Stromanstieg, jedoch nicht bei einem Stromabfall zur Geschwindigkeitsbegrenzung, was durchaus erwünscht sein, aber auch durch einen Gleichrichter (Betragsbildner 30 in Fig. 3 oder 4) im Istwertkanal des Begrenzungsreglers 12 verhindert werden kann.

Bei einer üblichen Auswahlschaltung mit Verstärkern 31 und 32, Dioden 33 und 34 und in Verbindung mit einem als pI-Regler 12 beschalteten Verstärker 35 gemäß Fig. 3 ist aber nachteilig, daß der durch die Diode 34 abgekoppelte Regler 35 nach Auftreten eines erneuten Stromanstiegs erst auf seinen Arbeitspunkt laufen muß, was eine Totzeit der Begrenzungsregelung bedeutet. Daher ist gemäß Fig. 4 vorgesehen, den über die Diode 33 geführten Ausgang der zur Vorgabe des konstanten Wertes (di/dt)$_0$* verwendeten Operationsverstärkers 31 und den über die Diode 34 geführten Ausgang des für den Begrenzungsregler vorgesehenen Operationsverstärkers 35 miteinander zu verbinden und die Rückführungen dieser Operationsverstärker an diesem gemeinsamen Verbindungspunkt (bzw. dem invertierenden nachgeschalteten Verstärker 32) abzugreifen. Solange daher die Diode 34 sperrt und den Regler 12 außer Eingriff hält, ist der Verstärker 35 offen und stellt sich daher mit seinem hohen Verstärkungsfaktor rasch auf einen Vorzeichenwechsel seiner Eingangsgröße — ( (di*/dt)* + di*/dt ein, um gegebenenfalls den Regler 12 schnell in Eingriff zu bringen.

**Patentansprüche**

1. Verfahren zum Betrieb eines Zwischenkreis-Umrichters (1, 2, 3) mit eingeprägtem Zwischenkreisstrom (i), für den ein gleitender Sollwert, d. h. ein nur mit endlicher Anstiegsgeschwindigkeit veränderlicher Sollwert (i*), vorgegeben wird, dadurch gekennzeichnet, daß die Anstiegsgeschwindigkeit (di*/dt) des Sollwertes (i*) mit steigender Umrichterfrequenz erhöht wird.

2. Verfahren nach Anspruch 1, dadurch gekennzeichnet, daß die Anstiegsgeschwindigkeit des Sollwertes entsprechend dem für den momentanen Betriebszustand zulässigen Maximalwert ((di*/dt)*) aus Führungsgrößen (f*) und Sollwerten (i*) des Umrichters ermittelt wird. (Fig. 1).

3. Verfahren nach Anspruch 1 oder 2, dadurch gekennzeichnet, daß als Maximalwert das Produkt aus Umrichterfrequenz (f*) und dem Strom (i*) bestimmt wird. (Fig. 1).

4. Verfahren nach Anspruch 3, dadurch gekennzeichnet, daß das Produkt aus Umrichterfrequenz (f*) und Strom (i*) als Sollwert (di*/dt)* einer den Maximalwert (di/dt)* bildenden Anstiegsgeschwindigkeits-Regelung vorgegeben wird. (Fig. 1).

5. Verfahren nach einem der Ansprüche 1 bis 4, dadurch gekennzeichnet, daß der Sollwert (i*) des Zwischenkreisstroms entsprechend dem Integral einer Sollwert-Anstiegsgeschwindigkeit (di*/dt) vorgegeben wird, wobei die Sollwert-Anstiegsgeschwindigkeit aus der Regelabweichung von einem vorgegebenen Sollwert (di*/dt)* für die Stromanstiegsgeschwindigkeit gebildet wird, und daß der Zwischenkreisstrom mit einem der Zwischenkreisspannung zugeordneten Vorsteuersignal (di*/dt + Uk) und einem aus der Regelabweichung (i*-i) des Zwischenkreisstroms vom gleitenden Sollwert gebildeten Regelsignal (i$_0$*) gesteuert wird.

6. Verfahren nach Anspruch 5, dadurch gekennzeichnet, daß der Zwischenkreisstrom (i) mittels eines Gleichrichters (1) gesteuert wird, der über eine Zwischenkreisdrossel (3) an einen Wechselrichter (2) angeschlossen ist, und daß das Vorsteuersignal entsprechend der wechselrichterseitigen Klemmenspannung der Drossel und/oder dem Spannungsabfall an der Zwischenkreisdrossel, insbesondere der dem Spannungsabfall proportionalen zeitlichen Ableitung (di/dt) des gleitenden Sollwerts gebildet wird. (Fig. 1).

7. Verfahren nach einem der Ansprüche 1 bis 6, dadurch gekennzeichnet, daß Betrag (i) und Phase (ε) des Umrichter-Ausgangsstromes durch zwei, jeweils einer orthogonalen Stromkomponente zugeordnete Führungsgrößen (i1**, i2**) bestimmt werden, daß jeweils aus einer Führungsgröße ein gleitender Sollwert (i1*, i2*) für die der Führungsgröße zugeordnete Stromkomponente gebildet wird, daß die Anstiegsgeschwindigkeit des Betrages des durch die gleitenden Sollwerte komponentenweise vorgegebenen Sollstromvektors gebildet wird, und daß aus der Regelabweichung (di*/dt)*-di*/dt der Anstiegsgeschwindigkeit di*/dt dieses Betrages und eines vorgegebenen Sollwertes (di*/dt)* eine den beiden Sollwerten gemeinsame Anstiegsgeschwindigkeit bestimmt wird. (Fig. 2).

8. Vorrichtung zum Betrieb eines Zwischenkreisumrichters (1, 2, 3) mit einem durch eine Regeleinrichtung (4) einprägbaren Zwischenkreisstrom (i) und einem von einer Führungsgröße (i**) beaufschlagten Hochlaufgeber (5) zur Vorgabe eines gleitenden Sollwertes (i*) für den Zwischenkreisstrom, wobei die Hochlaufgeschwindigkeit (di*/dt) des Hochlaufgebers die Anstiegsgeschwindigkeit des Sollwerts bestimmt, gekennzeichnet durch eine Einstellvorrichtung (10-13) für die Hochlaufgeschwindigkeit des Hochlaufgebers (5), die von Betriebsgrößen, (f*, i*, di*/dt) gespeist ist, von denen wenigstens eine eine Erhöhung der Anstiegsgeschwindigkeit mit steigender Umrichterfrequenz bewirkt.

9. Vorrichtung nach Anspruch 8, dadurch gekennzeichnet, daß die Einstelleinrichtung nur von Führungsgrößen (f*, di/dt)$_0$* und von aus Führungsgrößen (i**) abgeleiteten Größen (i*, di*/dt) gespeist ist.

10. Vorrichtung nach Anspruch 8 oder 9, gekennzeichnet durch eine Auswahlschaltung (10), die für die Hochlaufgeschwindigkeit des Hochlaufgebers zwischen einem konstant eingestellten und einem betriebsabhängig eingestellten Wert für die Stromanstiegsgeschwindigkeit des Sollwertes auswählt.

11. Vorrichtung nach einem der Ansprüche 8 bis 10, gekennzeichnet durch einen Anstiegsgeschwindigkeitsregler (12), dem die zeitliche Ableitung (di*/dt) des gleitenden Sollwertes (i*) und ein Anstiegsgeschwindigkeits-Sollwert (di*/dt)* vorgegeben ist und dessen Ausgangssignal einem Eingang (9) zur Vorgabe der Hochlaufgeschwindigkeit des Hochlaufgebers, insbesondere einem Eingang zur Einstellung der Integrationskonstanten eines den gleitenden Sollwerts (i*) liefernden Integrators (6) zugeführt ist.

12. Vorrichtung nach einem der Ansprüche 8 bis 11, gekennzeichnet durch einen vom gleitenden Sollwert (i*) und dem Istwert (i) des Zwischenkreisstromes oder der Amplitude des Umrichter-Ausgangsstroms beaufschlagten Stromregler (4), dessen Ausgangssignal ein der Hochlaufgeschwindigkeit (di*/dt) proportionales Vorsteuersignal und/oder ein der Zwischenkreisspannung proportionales Vorsteuersignal (Uk) aufgeschaltet ist.

13. Vorrichtung nach Anspruch 12, gekennzeichnet durch zwei jeweils von einer einer orthogonalen Strom-Komponente zugeordneten Führungsgröße (i1**, i2**) beaufschlagte Hochlaufgeber (31, 32), Mittel (30) zur Bildung eines Betrags-Sollwertes (i*) für einen auf den Zwischenkreisstrom oder die Amplitude des Umrichter-Ausgangsstroms wirkenden Stromregler (22) und zur Bildung eines Phasen-Sollwertes (ε*) für einen auf die Frequenz (f*) des Umrichters wirkenden Phasenregler, einer beiden Hochlaufgebern gemeinsamen Einstelleinrichtung (10, 11, 12, 13) für die Hochlaufgeschwindigkeit der Hochlaufgeber, die von der zeitlichen Ableitung des Betragssollwertes und einem vorgegebenen Sollwert beaufschlagt ist, einem ersten Additionsglied (23) am Ausgang des Betragreglers, dem die zeitliche Ableitung des Betragsollwertes und/oder die Zwischenkreisspannung (Uk) zugeführt ist, und einem zweiten Additionsglied am Ausgang des Phasenreglers, dem die zeitliche Änderung des Phasen-Sollwertes zugeführt ist (Fig. 2).

## Claims

1. Method for operating an intermediate circuit converter (1, 2, 3) with impressed intermediate circuit current (i), for which a sliding desired value, i.e. a desired value (i*), which is only variable with finite rate of rise, is input, characterised in that the rate of rise (di*/dt) of the desired value (i*) is raised with increasing converter frequency.

2. Method according to claim 1, characterised in that the rate of rise of the desired value is ascertained, in accordance with the maximum value ((di*/dt)*) permissible for the instantaneous operating state, from reference variables (f*) and desired values (i*) of the converter. (Figure 1)

3. Method according to claim 1 or 2, characterised in that the product of converter frequency (f*) and the current (i*) is determined as a maximum value. (Figure 1)

4. Method according to claim 3, characterised in that the product of converter frequency (f*) and current (i*) is input as a desired value (di*/dt)* of a rate of rise regulation establishing the maximum value (di/dt)*. (Figure 1)

5. Method according to one of the claims 1 to 4, characterised in that the desired value (i*) of the intermediate circuit current is input in accordance with the integral of a desired value rate of rise (di*/dt), the desired value rate of rise being established from the regulation deviation from an input desired value (di*/dt)* for the current rate of rise, and in that the intermediate circuit current is controlled with a pre-control signal (di*/dt + Uk) associated with the intermediate circuit voltage and a regulating signal (i_o*) established from the regulation deviation (i*-i) of the intermediate circuit current from the sliding desired value.

6. Method according to claim 5, characterised in that the intermediate circuit current (i) is controlled by means of a rectifier (1) which is connected by way of an intermediate circuit choke (3) to an inverter (2) and in that the pre-control signal is established in accordance with the terminal voltage of the choke on the inverter side and/or the voltage drop at the intermediate circuit choke, more particularly the time derivative (di*/dt) of the sliding desired value, which derivative is proportional to the voltage drop. (Figure 1).

7. Method according to one of the claims 1 to 6, characterised in that amount (i) and phase (ε) of the converter output current are determined by two reference variables (i1**, i2**) associated, in each case, with an orthogonal current component, in that a sliding desired value (i1*, i2*) for the current component associated with the reference variable is established in each case from a reference variable, in that the rate of rise of the amount of the desired current vector input by the sliding desired values component-wise is established and in that a rate of rise common to the two desired values is determined from the regulation deviation (di*/dt)*-di*/dt of the rate of rise di*/dt of this amount and of an input desired value (di*/dt)*. (Figure 2).

8. Arrangement for operating an intermediate circuit converter (1, 2, 3) with an intermediate circuit current (i), which can be impressed by a regulating device (4), and a run-up pick-up (5), upon which a reference variable (i**) acts, for the input of a sliding desired value (i*) for the intermediate circuit current, the run-up rate (di*/dt) of the run-up pick-up determining the rate of rise of the desired value, characterised by an adjusting device (10-13) for the run-up rate of the run-up pick-up (5) which is fed by operating variables, (f*, i*, di*/dt), of which at least one effects a raise in the rate of rise with increasing converter frequency.

9. Arrangement according to claim 8, characterised in that the adjusting device is only fed by reference variables (f*, di/dt)$_0$* and by variables (i*, di*/dt) derived from reference variables (i**).

10. Arrangement according to claim 8 or 9, characterised by a selecting circuit (10) which for the run-up rate of the run-up pick-up selects between a value adjusted so that it is constant and a value adjusted so that it is dependent upon operation for the current rate of rise of the desired value.

11. Arrangement according to one of the claims 8 to 10, characterised by a rate of rise regulator (12), into which the time derivative (di*/dt) of the sliding desired value (i*) and a rate of rise desired value (di*/dt)* is input and the output signal of which is supplied to an input (9) for the input of the run-up rate of the run-up pick-up, more particularly to an input for the adjustment of the integration constants of an integrator (6) supplying the sliding desired value (i*).

12. Arrangement according to one of the claims 8 to 11, characterised by a current regulator (4), upon which there act the sliding desired value (i*) and the actual value (i) of the intermediate circuit current or the amplitude of the converter output current and to the output signal of which a pre-control signal proportional to the run-up rate (di*/dt) and/or a pre-control signal (Uk) proportional to the intermediate circuit voltage is applied.

13. Arrangement according to claim 12, characterised by two run-up pick-ups (31, 32), upon which there acts, in each case, a reference variable (i1**, i2**) associated with an orthogonal ·current component, means (30) for establishing an amount desired value (i*) for a current regulator (22) acting on the intermediate circuit current or the amplitude of the converter output current and for establishing a phase desired value (ε*) for a phase regulator acting on the frequency (f*) of the converter, an adjusting device (10, 11, 12, 13) common to both run-up pick-ups for the run-up rate of the run-up pick-ups upon which there act the time derivative of the amount desired value and an input desired value, a first addition element (23) at the output of the amount regulator, to which the time derivative of the amount desired value and/or the intermediate circuit voltage (Uk) is supplied, and a second addition element at the output of the phase regulator (24) to which the temporal variation of the phase desired value is supplied. (Figure 2).

## Revendications

1. Procédé pour faire fonctionner un convertisseur (1, 2, 3) comportant un circuit intermédiaire, dans lequel est injecté un courant (i), pour lequel une valeur de consigne mobile, c'est-à-dire une valeur de consigne (i*) variable uniquement avec une vitesse de montée finie, est prédéterminée, caractérisé par le fait que la vitesse de montée (di*/dt) de la valeur de consigne (i*) est accrue lorsque la fréquence du convertisseur augmente.

2. Procédé suivant la revendication 1, caractérisé par le fait que la vitesse de montée de la valeur de consigne est déterminée conformément à la valeur maximale ((di*/dt)*) admissible pour l'état de fonctionnement instantané, à partir de grandeurs de commande (f*) et de valeurs de consigne (i*) du convertisseur. (Figure 1).

3. Procédé suivant la revendication 1 ou 2, caractérisé par le fait que le produit de la fréquence (f*) du convertisseur par le courant (i*) est déterminé en tant que valeur maximale. (Figure 1).

4. Procédé suivant la revendication 3, caractérisé par le fait que le produit de la fréquence (f*) du convertisseur par le courant (i*) est prédéterminé en tant que valeur de consigne (di*/dt)* d'un système de régulation de la vitesse de montée, qui forme la valeur maximale (di/dt)*. (Figure 1).

5. Procédé suivant l'une des revendications 1 à 4, caractérisé par le fait que la valeur de consigne (i*) du courant du circuit intermédiaire est prédéterminée conformément à l'intégrale d'une vitesse de montée (di*/dt) de la valeur de consigne, la vitesse de montée de la valeur de consigne étant formée à partir de l'écart de réglage par rapport à une valeur de consigne prédéterminée (di*/dt)* pour la vitesse de montée du courant, et que le courant du circuit intermédiaire est commandé avec un signal de commande pilote (di*/dt + Uk) associé à la tension du circuit intermédiaire, et avec un signal de réglage (i$_0$*) formé à partir de l'écart de réglage (i*-i) du courant du circuit intermédiaire par rapport à la valeur de consigne mobile.

6. Procédé suivant la revendication 5, caractérisé par le fait que le courant (i) du circuit intermédiaire est commandé au moyen d'un redresseur (1), qui est raccordé par l'intermédiaire d'une bobine (3) du circuit intermédiaire à un onduleur (2), et que le signal de commande pilote est formé en fonction de la tension aux bornes de la bobine d'arrêt du côté de l'onduleur, et/ou en fonction de la chute de tension dans la bobine d'arrêt du circuit intermédiaire, notamment en fonction de la dérivée dans le temps (di*/dt), proportionnelle à la chute de tension, de la valeur de consigne mobile. (Figure 1).

7. Procédé suivant l'une des revendications 1 à 6, caractérisé par le fait que la valeur (i) et la phase (ε) du courant de sortie du convertisseur sont déterminées par deux grandeurs de commande (i1**, i2**) associées à des composantes orthogonales respectives du courant, qu'une valeur de consigne mobile (i1*, i2*) pour la composante de courant associée à la grandeur de commande est formée respectivement à partir d'une grandeur de commande, que la vitesse de montée de la valeur du vecteur du courant de consigne, prédéterminée pour ce qui concerne ses composantes par les valeurs de consigne mobiles, est formée et qu'une vitesse de montée commune aux deux valeurs de consigne est déterminée à partir de l'écart de réglage (di*/dt)*-di*/dt entre la vitesse de montée di*/dt possédant cette valeur et une valeur de consigne prédéterminée (di*/dt)*. (Figure 2).

8. Dispositif pour faire fonctionner un convertisseur (1, 2, 3) comportant un circuit intermédiaire, et dans lequel un courant (i) est injecté dans le circuit intermédiaire par un dispositif de régulation (4) et qui comporte un générateur (5) d'un signal de marche à régime élevé, qui est chargé par une grandeur de commande (i**) et sert à prédéterminer une valeur de consigne mobile (i*) pour le courant du circuit intermédiaire, la vitesse de fonctionnement à régime élevé (di*/dt) du générateur du signal de marche à régime élevé déterminant la vitesse de montée de la valeur de consigne, caractérisé par un dispositif (10-13) servant à régler la vitesse de marche à régime élevé du générateur (5) du signal de marche à régime élevé, qui est obtenu à partir de grandeurs de fonctionnement (f*, i*, di*/dt), dont l'une au moins réalise un accroissement de la vitesse de montée lorsque la fréquence du convertisseur augmente.

9. Dispositif suivant la revendication 8, caractérisé par le fait que le dispositif de réglage est alimenté uniquement par des grandeurs de commande (f*, di/dt)₀* et par des grandeurs (i*, di*/dt) dérivées de grandeurs de commande (i**).

10. Dispositif suivant la revendication 9, caractérisé par un circuit de sélection (10), qui, pour la vitesse de marche à régime élevé du générateur du signal de marche à régime élevé, effectue un choix entre une valeur de la vitesse de montée courant, réglée à une valeur constante et une valeur réglée en fonction du fonctionnement.

11. Dispositif suivant l'une des revendications 8 à 10, caractérisé par un régulateur (12) de la vitesse de montée, pour lequel la dérivée dans le temps (di*/dt) de la valeur de consigne mobile (i*) et une valeur de consigne (di*/dt)* de la vitesse de montée sont prédéterminées et dont le signal de sortie est envoyé à une entrée (9) utilisée pour prédéterminer la vitesse de marche à régime élevé du générateur du signal de marche à régime élevé, notamment une entrée servant à régler la constante d'intégration d'un intégrateur (6) délivrant la valeur de consigne mobile (i*).

12. Dispositif suivant l'une des revendications 8 à 11, caractérisé par un régulateur de courant (4), qui est chargé par la valeur de consigne mobile (i*) et par la valeur réelle (i) du courant intermédiaire ou par l'amplitude du courant de sortie du convertisseur et au signal de sortie duquel est ajouté un signal de commande pilote proportionnel à la vitesse de marche à régime élevé (di*/dt), et/ou un signal de commande pilote (Uk) proportionnel à la tension du circuit intermédiaire.

13. Dispositif suivant la revendication 11, caractérisé par deux générateurs de signaux de marche à régime élevé (31, 32), qui sont chargés par des grandeurs pilotes respectives (i1**, i2**), associées à des composantes orthogonales du courant, des moyens (30) servant à former une valeur de consigne (i*) de l'intensité pour un régulateur de courant (22) agissant sur le courant du circuit intermédiaire ou sur l'amplitude du courant de sortie du convertisseur et à former une valeur de consigne (ε*) de la phase pour un régulateur de phase agissant sur la fréquence (f) du convertisseur, un dispositif de réglage (10, 11, 12, 13) commun pour les deux générateurs de signaux de marche à régime élevé et servant à régler la vitesse de marche à régime élevé du générateur du signal de marche à régime élevé, qui est chargé par la dérivée dans le temps de la valeur de consigne de l'intensité et par une valeur de consigne prédéterminée, par un premier circuit additionneur (23), qui est raccordé à la sortie du régulateur d'intensité et auquel est envoyée la dérivée dans le temps de la valeur de consigne de l'intensité et/ou la tension intermédiaire (Uk), et par un second circuit additionneur, qui est raccordé à la sortie du régulateur de phase (24) et auquel est envoyé la variation dans le temps de la valeur de consigne de la phase (figure 2).

FIG 1

FIG 2

FIG 3

FIG 4